# FASCICULE DE BREVET EUROPEEN

(11) **EP 0 370 916 B1**
(45) Date de publication et mention de la délivrance du brevet: **05.05.1993**
(21) Numéro de dépôt: 89403246.5
(22) Date de dépôt: 23.11.1989
(51) Int. Cl.: C21D 9/00, F27B 9/20

(54) **Four de réchauffage, de maintien et d'accumulation de produits sidérurgiques**
Ofen zum Wärmen, Halten und Speichern metallurgischer Produkte
Furnace for reheating, holding and storing of metallurgical products

(30) Priorité: 25.11.1988 IT 2273588
(43) Date de publication de la demande: 30.05.1990
(73) Titulaire: STEIN HEURTEY, Société Anonyme:, F-91130 Ris Orangis (FR)
(72) Inventeur: Cova, Alfredo, I-22071 Cadorago (Como) (IT); Colombo, Osvaldo, I-28100 Novara (IT)
(74) Mandataire: Armengaud Ainé, Alain

(56) Documents cités:
- DE-A- 3 310 867
- DE-B- 1 216 912
- DE-C- 660 562
- DE-C- 1 161 931
- FR-A- 2 116 136

## Description

La présente invention est relative à un four de réchauffage, de maintien, et d'accumulation de produits sidérurgiques.

Dans les aciéries à cycle continu, on utilise depuis un certain temps un procédé de production permettant d'obtenir des produits sidérurgiques finis et semi-finis à partir du métal liquide contenu dans une poche de coulée, sans refroidissement intermédiaire, les produits obtenus en aval de la poche étant envoyés directement dans un four de remise en température et d'égalisation et, de là, au laminage.

L'application d'un procédé de ce type exige cependant l'intercalation, entre la machine de coulée continue et le laminoir d'un deuxième four dit de maintien qui offre la capacité d'emmagasinage nécessaire pour les produits provenant de la coulée en cas d'arrêt momentané du laminoir ou, simplement, pour absorber les différences de rythme de travail entre la coulée et le laminage.

Dans ces conditions, il est possible, en cas d'arrêt momentané du laminoir (par suite d'une panne, d'un changement de dimensions du train de laminage, etc), d'emmagasiner dans le four de maintien les semi-produits de la coulée sans qu'il soit nécessaire d'interrompre celle-ci et d'absorber une interruption momentanée de la coulée en envoyant au laminage les semi-produits préalablement emmagasinés.

Le procédé connu, qui consiste à utiliser deux fours, l'un de réchauffage et d'égalisation, et l'autre de maintien, qui sont généralement disposés en dérivation, implique cependant, en raison de la nécessité d'accumuler et de reprendre les produits entre les deux fours, un mélange des produits provenant de la coulée qui, par conséquent, n'arrivent pas au laminoir dans l'ordre dans lequel ils sont sortis de la coulée elle-même. Ce mélange peut être parfois inacceptable, notamment dans le cas de petits lots de produits ayant des caractéristiques spéciales qu'il n'est évidemment pas question de mélanger aux autres.

Le but de l'invention est l'élimination des inconvénients mentionnés ci-dessus par la réalisation d'un four assurant aussi bien le maintien que le réchauffage et l'égalisation et ne modifiant pas la succession des produits telle qu'elle se présente à la sortie de la coulée.

Ce but est atteint, suivant l'invention, au moyen d'un four de réchauffage, de maintien et d'accumulation de produits sidérurgiques à l'intérieur duquel les produits se déplacent sur un trajet de déplacement sur longerons orientée de manière à relier transversalement une ligne de rouleaux d'enfournement à une ligne de rouleaux de défournement, le trajet de déplacement étant constitué par des longerons de support des produits, et par des longerons de transport qui sont situés à une certaine distance des premiers et peuvent se soulever par rapport à eux et se déplacer horizontalement pour faire avancer les produits pas-à-pas et dont les extrémités s'intercalent dans les rouleaux des lignes de rouleaux pour prendre ou déposer les produits sur eux, ce four étant caractérisé par le fait que les longerons de support se répartissent en au moins deux groupes qui se suivent et peuvent être soulevés indépendamment l'un de l'autre, les deux groupes de longerons de support et les longerons de transport pouvant se déplacer dans le sens vertical par rapport aux lignes de rouleaux pour passer d'une position d'élévation maximale, dans laquelle la surface supérieure des longerons se trouve à un niveau supérieur par rapport aux lignes de rouleaux, à une position d'élévation minimale dans laquelle la surface supérieure des longerons se trouve à un niveau inférieur par rapport aux lignes de rouleaux.

L'invention est décrite ci-après d'une manière plus détaillée au moyen d'un exemple de réalisation en se référant aux dessins sur lesquels :

La figure 1 est une vue schématique en élévation latérale d'un four de maintien, de réchauffage et d'égalisation suivant l'invention.

La figure 2 est une coupe schématique suivant la ligne II- II de la figure 1.

La figure 3 est un schéma montrant la succession des déplacements des produits dans le four représenté par la figure 1, et

La figure 4 est un schéma représentant la succession des opérations d'accumulation des produits dans le four représenté par la figure 1.

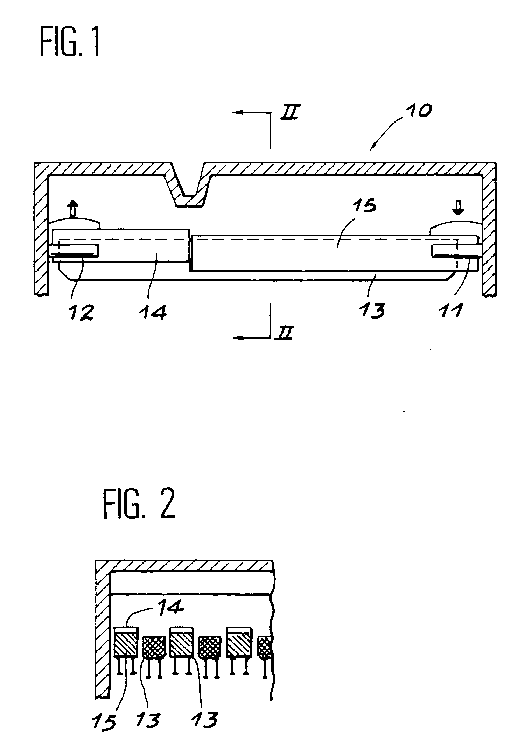

Comme le montre la figure 1, un four de réchauffage et d'accumulation 10 suivant l'invention comprend une ligne de rouleaux d'enfournement 11, une ligne de rouleaux de défournement 12, et une pluralité de longerons de transport 13 qui s'étendent entre les lignes de rouleaux et qui sont disposés (comme l'indique la figure 2) à une certaine distance de longerons de support de niveau variable constituant deux ensembles consécutifs 14 et 15.

Les longerons de transport 13 peuvent se déplacer sous l'action d'un mécanisme de type connu et, par conséquent, non représenté, soit verticalement, entre une position d'élévation maximale dans laquelle leur surface supérieure se trouve à un niveau supérieur à celui des lignes de rouleaux, et une position d'élévation minimale dans laquelle leur surface supérieure se trouve à un niveau inférieur à celui des lignes de rouleau, soit horizontalement, entre une position dans laquelle l'extrémité de gauche des longerons 13 se trouve à proximité de la paroi de gauche du four, (comme l'indique la figure 1), et une position dans laquelle l'extrémité de droite des longerons se trouve à proximité de la paroi de droite du four.

Les longerons de support 14 et 15 à niveau variable peuvent par contre se déplacer indépendamment l'un de l'autre (toujours sous l'action de mécanismes connus, et par conséquent, non représentés) uniquement dans le sens vertical, entre une position d'élévation maximale dans laquelle leur surface supérieure se trouve à un niveau supérieur à celui des lignes de rouleaux, et une position d'élévation minimale dans laquelle leur surface supérieure se trouve à un niveau inférieur à celui des lignes de rouleaux.

Les longerons 14 à niveau variable sont placés dans une zone du four dite de réchauffage tandis que les longerons 15 à niveau variable sont placés dans une zone du four dite d'accumulation.

Pour pouvoir s'insérer entre les rouleaux des lignes de rouleaux, les longerons présentent des extrémités qui s'amincissent dans le sense horizontal.

Le four comprend naturellement également différents dispositifs nécessaires à son fonctionnement notamment des brûleurs, des conduits de chaleur et de fumées, etc., qui ne seront pas décrits puisqu'ils font partie de l'état de la technique, et que par conséquent, ils peuvent être facilement imaginés par l'homme de l'art. En outre, toutes les surfaces intérieures du four exposées à la chaleur sont recouvertes de matériaux réfractaires convenables correspondant aux applications envisagées.

En raison des possibilités de déplacement qu'offre un four réalisé de cette manière il est possible d'effectuer à l'intérieur de ce four toutes les opérations d'accumulation, d'évacuation et de fonctionnement continu, sans qu'il soit nécessaire d'utiliser d'autres fours. Les séries d'opérations correspondant à ces fonctions peuvent évidemment être très diverses en raison de la souplesse du système adopté.

A titre d'exemple et pour mettre en évidence les possibilités et les avantages d'un four dans lequel sont appliqués les principes de l'invention, la description suivante a pour objet de montrer les possibilités offertes pour le déplacement de produits provenant d'une coulée continue.

Dans cette description, l'expression "cycle élémentaire des longerons de transport 13" désignera un déplacement, bien connu de l'homme de l'art, qui, par la combinaison du mouvement vertical et du mouvement horizontal des longerons 13, provoque l'avance des produits sur ces longerons. D'une manière plus précise, ce mouvement élémentaire consiste en un soulèvement des longerons 13 qui a pour effet de soulever les produits qui peuvent se trouver déposés sur eux, en une translation ayant pour effet de déplacer les produits dans le sens horizontal, et enfin une descente pour redéposer les produits transportés. Les longerons reviennent ensuite, par une translation à vide, dans la position primitive où ils sont près à exécuter un autre mouvement élémentaire.

Pour la description qui suit des différents cycles, on prendra comme niveau de référence -/+ 0 la tangente supérieure des lignes de rouleaux d'enfournement et de défournement et on désignera en conséquence les niveaux atteints par les différents longerons.

On commencera par décrire un cycle possible de fonctionnement en continu dans lequel les produits qui arrivent dans le four en provenance de la coulée continue sur les lignes de rouleaux 11 ne sont pas accumulés, mais traversent le four en ne restant dans la zone de réchauffage que pendant le temps nécessaire à l'obtention du réchauffage et de l'égalisation nécessaire dans le cas du procédé de production envisagée.

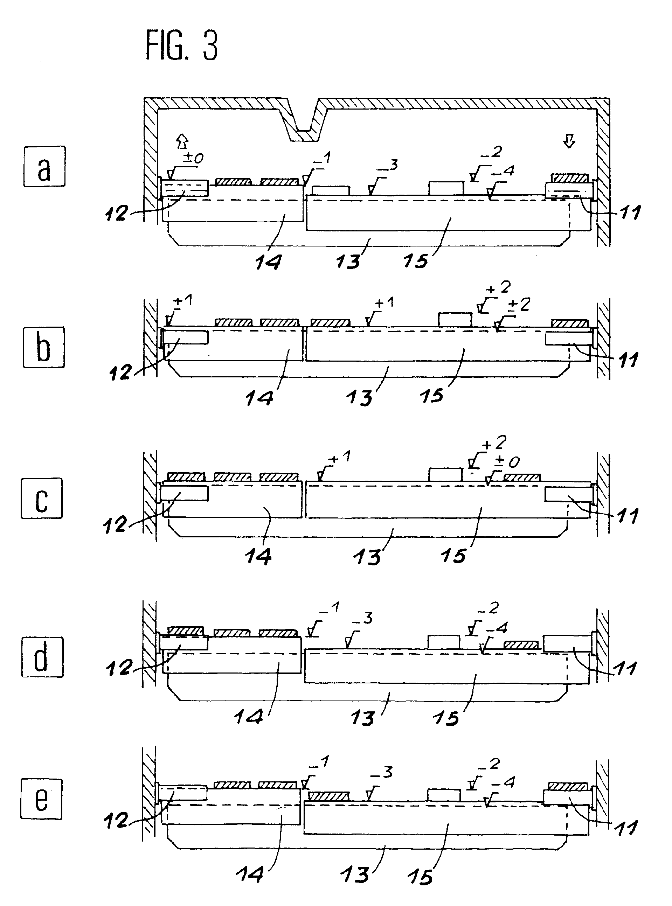

Comme le montre la figure 3a, la condition de régime (qu'il sera facile d'obtenir d'après les descriptions suivantes) implique un produit arrivant sur la ligne de rouleaux 11, un produit à l'extrémité opposée des longerons 15 se trouvant au niveau -3 et deux produits sur des longerons 14 se trouvant au niveau -1, et par conséquent au dessous du plan de déplacement des produits sur les lignes de rouleaux.

Comme la vitesse de laminage et, par conséquent, de défournement est nettement supérieure à la vitesse de coulée et, par conséquent, d'enfournement, la ligne de rouleaux 12 est certainement libre au moment où l'enfournement du nouveau produit, arrivé sur la ligne de rouleau 11 sera terminé.

Lorsque l'enfournement est terminé, les longerons 14 et 15 sont soulevés jusqu'au niveau + 1, et les longerons 13 sont soulevés au niveau +/- 0, comme l'indique la figure 3b, de sorte que les lignes de rouleaux ne soient pas chargées mécaniquement pendant les mouvements d'avance suivants des produits. Par une succession de mouvements élémentaires des longerons 13, les produits se déplacent dans le four de manière à aboutir à la situation représentée par la figure 3c.

L'abaissement au niveau -4 des longerons 13 et au niveau -1 des longerons 14 qui se produit ensuite permet de placer sur la ligne de rouleaux 12 le premier produit de la file, ce qui en permet le défournement et, par conséquent, l'envoi au laminoir.

En même temps, les longerons 15 se mettent au niveau -4, ce qui permet l'arrivée d'un niveau produit de la coulée continue sur la ligne de rouleaux 11 comme l'indique la figure 3d.

Le produit qui est le plus proche de la ligne de rouleaux 11 est par conséquent transporté par une succession de mouvements élémentaires des longerons 13 entre les niveaux -1 et -4 à l'extrémité opposée des longerons 15. Cette opération s'effectue pendant l'intervalle de temps nécessaire à l'enfournement du nouveau produit, ce qui donne la situation représentée par la figure 3e, analogue à la situation initiale correspondant à la figure 3a, ce qui permet de recommencer une nouvelle séquence dans les conditions décrites.

En cas d'arrêt imprévu du laminoir, le four offre, comme on l'a dit, la possibilité de stocker les produits provenant de la coulée continue en en garantissant le maintien à la température voulue pour qu'ils puissent être défournés ensuite pour la reprise du laminage.

On peut supposer que l'interruption du fonctionnement du laminage se produise quand le four est dans la situation représentée par la figure 3d.

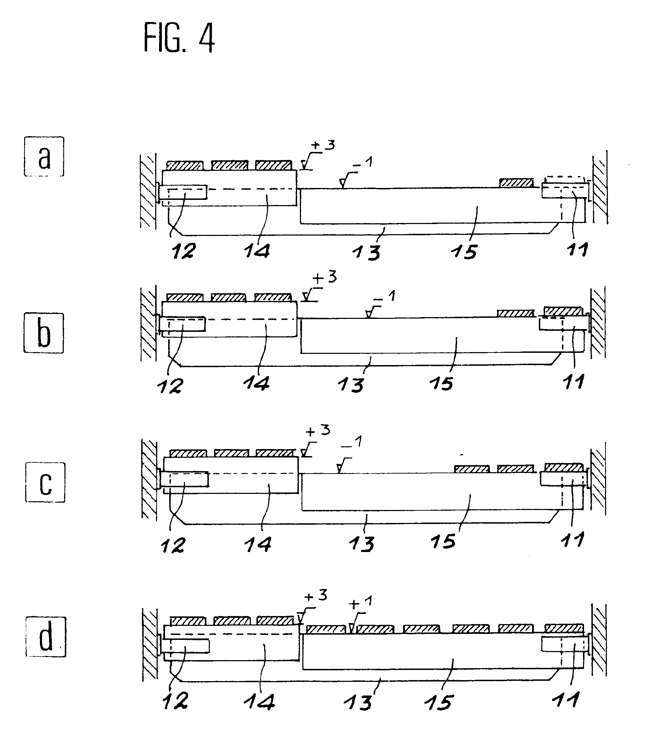

Un exemple de déplacement à l'intérieur du four pour obtenir l'accumulation des produits est représenté par la figure 4.

Les longerons 14 sont soulevés et maintenus au niveau +3, pendant toute la durée de l'accumulation de manière que les produits qui sont placés sur eux ne sont pas déplacés par les autres mouvements des longerons 13, et qu'à chaque arrivée nouvelle de produits sur la ligne à rouleaux, les longerons 15 et les longerons 13 s'abaissent et se déplacent d'une manière analogue à celle qui a déjà été décrite dans le cas du fonctionnement en continu pour déplacer les produits qui se trouvent sur eux, la seule différence étant que les produits qui arrivent par la ligne de rouleaux ne sont pas transportés jusqu'à l'extrémité opposée des longerons 15, mais seulement à une distance légèrement supérieure à la largeur des différents produits, ce qui aboutit aux positions indiquées par les figures 4a, 4b, 4c, 4d.

La capacité maximale du four dans la situation correspondant à la figure 4 doit être telle qu'elle assure l'accumulation d'un nombre de produits équivalant au moins à la capacité maximale de la poche, de manière à garantir dans chaque cas la possibilité de stockage des produits jusqu'à la reprise du laminage.

Dans ces conditions, il est facile d'imaginer, à la lumière de ce qui a été exposé, une séquence possible de défournement pouvant s'effectuer à la reprise du laminage. Il suffit d'abaisser les longerons 13 et 14 de manière que le premier produit de la file soit déposé sur la ligne de rouleaux 12 et, par conséquent, défourné, puis de soulever les longerons 14 et 15 au même niveau +1 et de faire exécuter aux longerons 13 autant de déplacements élémentaires qu'il en faut pour déplacer d'une position tous les produits dans le four de manière à placer un autre produit sur la verticale de la ligne de rouleaux 12, d'abaisser les longerons 13 et 14 pour déplacer le produit sur la ligne de rouleaux et, de cette manière, vider complètement le four.

Naturellement, toutes les manières de procéder qui viennent d'être décrites le sont uniquement à titre d'exemple, et compte tenu de la grande souplesse des déplacements possibles à l'intérieur d'un four suivant l'invention, il est facile d'en imaginer d'autres pour satisfaire des exigences particulières, par exemple pour faire varier le temps de maintien des produits dans les différentes zones du four de manière à modifier les traitements thermiques. De même, la structure du four telle qu'elle est indiquée par les dessins et les schémas, ne doit pas être considérée comme limitant l'invention. Par exemple, les lignes de rouleaux peuvent être montées à l'extérieur du four et les longerons peuvent s'étendre à l'extérieur du four pour les rejoindre.

Par ailleurs, le mouvement relatif entre les longerons et les lignes de rouleaux qui provoque le soulèvement des produits par rapport aux lignes à rouleaux elles-mêmes peut s'obtenir évidemment autrement que par le déplacement vertical des longerons de support et également par un mouvement vertical opposé des lignes de rouleaux, comme on peut facilement l'imaginer, en faisant varier en conséquence la succession et l'ampleur des mouvements des longerons.

## Revendications

1. Four de réchauffage, de maintien et d'accumulation de produits sidérurgiques dans lequel les produits se déplacent sur un trajet de déplacement sur des longerons placé de manière à relier dans le sens transversal une ligne de rouleaux d'enfournement et une ligne de rouleaux de défournement, le trajet de déplacement étant constitué par des longerons de support des produits, et par des longerons de transport situés à une certaine distance des premiers et pouvant effectuer un mouvement de soulèvement par rapport à eux et un mouvement de déplacement horizontal faisant avancer pas-à-pas les produits, et dont les extrémités sont placées entre les rouleaux des lignes de rouleaux pour enlever et déposer les produits sur eux caractérisé en ce que les longerons de support (14, 15) sont subdivisés en deux groupes au moins situés à la suite l'un de l'autre et pouvant se soulever indépendamment l'un de l'autre, les deux groupes de longerons de support (14, 15) et les longerons de transport (13) pouvant se déplacer dans le sens vertical par rapport aux lignes de rouleaux (11, 12), pour passer d'une position d'élévation maximale dans laquelle la surface supérieure des longerons est à un niveau supérieur à celui des lignes de rouleaux, à une position d'élévation minimale, dans laquelle la surface supérieure des longerons est à un niveau inférieur à celui des lignes de rouleaux.

2. Four selon la revendication 1, caractérisé en ce qu'il comprend des dispositifs de déplacement dans le sens vertical des longerons de manière à pouvoir placer ceux-ci dans des positions déterminées, comprises entre lesdites positions d'élévation minimale et maximale , et reliées entre elles de manière à permettre qu'au moins les longerons de transport (13) puissent atteindre le niveau des longerons de support (14,15) pendant une course du mouvement horizontal de manière à transporter de la quantité d'un pas les produits qui se trouvent sur les longerons de support.

3. Four selon la revendication 1, caractérisé en ce qu'un déplacement relatif entre les lignes de rouleaux (11,12) et les longerons de support (14,15) est réalisé au moyen d'un mouvement vertical des longerons de support.

4. Four selon la revendication 1, caractérisé en ce qu'un déplacement relatif des lignes de rouleaux (11,12) et des longerons de support (14,15) est obtenu par un mouvement vertical des lignes de rouleaux.

## Patentansprüche

1. Ofen zum Wärmen, Warmhalten und Speichern von metallurgischen Produkten, in dem die Produkte auf einer Transporteinrichtung, die in Querrichtung eine Reihe von Rollen zur Beschickung des Ofens und eine Reihe von Rollen zur Entnahme der Produkte aus dem Ofen verbindet, über Tragbalken bewegt werden, wobei die Transporteinrichtung gebildet wird durch Tragbalken für die Produkte und Transportbalken, die in einer bestimmten Entfernung von den ersteren angeordnet sind und relativ zu diesen eine Hubbewegung sowie eine horizontale Verschiebebewegung ausführen können, wodurch die Produkte schrittweise vorwärts bewegt werden, und deren Enden zwischen den Rollen der Rollenreihen zum Hochheben und Absenken der Produkte auf diese angeordnet sind,
dadurch **gekennzeichnet**,
daß die Tragbalken (14, 15) in mindestens zwei Gruppen unterteilt sind, die hintereinander angeordnet sind und unabhängig voneinander angehoben werden können, wobei die beiden Gruppen von Tragbalken (14, 15) und die Transportbalken (13) in vertikaler Richtung relativ zu den Rollenreihen (11, 12) bewegt werden können, um von einer oberen Endstellung, in der die obere Fläche der Balken oberhalb der durch die Rollenreihen gebildeten Fläche liegt, in eine untere Endstellung zu gelangen in der die Oberfläche der Balken unterhalb der durch die Rollenreihen gebildeten Fläche liegt.

2. Ofen nach Anspruch 1,
**gekennzeichnet** durch
Vorrichtungen zur vertikalen Verschiebung der Balken, mit denen diese in bestimmte Stellungen zwischen der oberen und der unteren Endstellung gebracht und so zwischen diesen verschoben werden können, daß mindestens die Transportbalken (13) die Höhe der Tragbalken (14, 15) während eines horizontalen Bewegungsverlaufs erreichen können, um so schrittweise die Produkte, die auf den Tragbalken aufliegen, weiterzutransportieren.

3. Ofen nach Anspruch 1,
dadurch **gekennzeichnet**,
daß eine Relativbewegung zwischen den Rollenreihen (11, 12) und den Tragbalken (14, 15) durch eine vertikale Bewegung der Tragbalken erreicht wird.

4. Ofen nach Anspruch 1
dadurch **gekennzeichnet**,
daß eine Relativbewegung zwischen den Rollenreihen (11, 12) und den Tragbalken (14, 15) durch eine Vertikalbewegung der Rollenreihen erzielt wird.

## Claims

1. A furnace for reheating, holding and accumulation of iron and steel products, in which furnace the products travel along a movement path with longitudinal members which is arranged to connect transversely a roller track for introduction into the furnace and a roller track for removal from the furnace, the movement path consisting of longitudinal support members for the products and of longitudinal transfer members which are alternated with the former and provided with a raising movement in relation to these and with a horizontal movement for the gradual advance of the products and have their ends interposed between the rollers of the roller tracks in order to remove the products from these or place the products on them, characterized in that the longitudinal support members (14, 15) are divided into at least two groups, which are arranged in sequence and each of which can be raised independently, the two groups of longitudinal support members (14-15) and the longitudinal transfer members (13) being vertically movable, in relation to the roller tracks (11, 12) between a position of maximum elevation, in which the upper surface of the longitudinal members is at a higher level in relation to the roller tracks, and a position of minimum elevation, in which the upper surface of the longitudinal members is at a lower level in relation to the roller tracks.

2. A furnace according to claim 1, characterized in that it comprises means of vertical movement of the longitudinal members, which means are capable of causing the latter to assume defined positions which are comprised between the said positions of minimum and maximum elevation and interrelated so as to render reachable or not, from the longitudinal transfer members (13), the level determined by the longitudinal support members (14, 15) during a horizontal movement cycle, and thus to transport by one step the products present on the longitudinal support members.

3. A furnace according to claim 1, characterized in that a relative movement between roller tracks (11, 12) and longitudinal support members (14, 15) is achieved by means of vertical movement of the longitudinal support members.

4. A furnace according to claim 1, characterized in that a relative movement between roller tracks (11, 12) and longitudinal support members (14, 15) is achieved by means of vertical movement of the roller tracks.
